# EUROPEAN PATENT APPLICATION

(11) **EP 4 811 495 A1**
(43) Date of publication of application: **23.09.2026**
(21) Application number: 24891855.9
(22) Date of filing: 13.11.2024
(51) Int. Cl.: H01M 10/54, C22B 26/12, C22B 7/00, B02C 19/18, B02C 23/08, B03C 1/025, H01M 10/052, H01M 4/58

(54) **VALUABLE METAL RECOVERY REACTANT, VALUABLE METAL SHRED, AND METHOD OF RECOVERING VALUABLE METAL**

(30) Priority: 13.11.2023 KR 20230156559
(71) Applicant: POSCO Holdings Inc., Pohang-si, Gyeongsangbuk-do 37859 (KR)
(72) Inventor: KIM, Wanyi, Pohang-si, Gyeongsangbuk-do 37859 (KR); PARK, Joongkil, Pohang-si, Gyeongsangbuk-do 37859 (KR); PARK, Chonglyuck, Pohang-si, Gyeongsangbuk-do 37859 (KR); HAN, Sangwoo, Pohang-si, Gyeongsangbuk-do 37859 (KR); PARK, Junyong, Pohang-si, Gyeongsangbuk-do 37859 (KR)
(74) Representative: Zacco Sweden AB
(86) International application number: PCT/KR2024/096494
(87) International publication number: WO 2025/105909

(57) **Abstract**

The present invention relates to a valuable metal reactant, a valuable metal pulverized product, and a method for recovering valuable metals. The valuable metal reactant of the present invention is a valuable metal reactant comprising valuable metals recovered from a waste battery, and includes a first valuable metal-containing material comprising an alloy or an oxide including at least one of iron (Fe) and phosphorus (P), a second valuable metal-containing material comprising a non-magnetic material, and a carbon compound comprising carbon. The first valuable metal-containing material comprises a third valuable metal-containing material comprising a magnetic material and a first lithium compound attached to a surface of the third valuable metal-containing material, and a lithium content of the first lithium compound is 1.5 wt % or more based on a total weight of the first valuable metal-containing material.

## Description

### [TECHNICAL FIELD]

The present invention relates to a waste battery, and more particularly, to a valuable metal reactant recovered from waste battery recycling, a valuable metal pulverized product, and a method for recovering valuable metals.

### [BACKGROUND ART]

As the global demand for electric vehicles (EVs) intensifies, the disposal of waste batteries generated from these vehicles is emerging as a significant social issue. In the case of lithium secondary batteries, which are the primary raw material for these waste batteries, they contain organic solvents, explosive substances, and heavy metals such as Ni, Co, Mn, Fe, and P. However, Ni, Co, Mn, Fe, P, and Li are of high scarcity value as valuable metals; thus, processes for their recovery and recycling after the batteries are discarded have emerged as critical research fields.

Specifically, a lithium secondary battery primarily consists of copper and aluminum used as current collectors; oxides containing Li, Ni, Co, Mn, Fe, and P constituting a positive electrode material; and graphite and Si utilized as a negative electrode material. It also includes a separator that isolates the positive electrode material from the negative electrode material, and an electrolyte injected into the separator. The solvent for the electrolyte and the solvent used for the salt are typically a mixture of organic carbonates such as ethylene carbonate and propylene carbonate, and LiPF₆, for example, is used as the salt.

To utilize waste batteries, there is growing interest in waste battery recycling processes where the waste batteries are crushed to generate intermediate materials such as battery pulverized materials or black powder, followed by subsequent processes to recover valuable metals. Specifically, the main components of waste batteries consist of expensive valuable metal elements such as Ni, Co, Mn, Li, Fe, and P.

Waste batteries are, for example, batteries that have reached the end of their lifespan after being used in secondary battery systems for a cycle of 5 to 10 years. Recycling the main components of these waste batteries is essential from both environmental and cost perspectives. Through conventional crushing, grinding, or gravity separation treatments, these waste batteries produce a mixture of positive electrode and negative electrode materials in the form of black powder, an intermediate product. From the black powder thus generated, valuable metals essential for battery production are recovered through hydrometallurgical processes such as leaching, solvent extraction, or crystallization. This ensures a stable supply of raw materials and can drastically reduce battery manufacturing costs.

In the separation process of reactants subjected to calcination heat treatment as a method for recovering waste batteries, a method of preferentially separating graphite followed by magnetic separation to recover valuable metals has been researched. However, when graphite is separated first, a large amount of fine lithium compound particles, such as LiAlO₂, Li₅AlO₄, LiAl₅O₈, Li₂CO₃, LiF, Li₃PO₄, Li₄P₂O₇, LiPO₃, Li₂SiO₃, Li₄SiO₄, Li₂Si₂O₅, LiFeO₂, LiFe₅O₈, Li₃Fe₅O₈, and Li₅FeO₄, is mixed with the graphite. Consequently, during the post-treatment separation process to remove the graphite, these lithium compounds are included and removed together, resulting in a loss of lithium content transferred to subsequent processes and a decrease in the lithium recovery rate.

### [DETAILED DESCRIPTION OF THE INVENTION]

### [TECHNICAL PROBLEM]

A valuable metal reactant according to an embodiment of the present invention provides a reactant having a high content of valuable metals, specifically lithium, when recovering valuable metals in a subsequent process.

A valuable metal pulverized product according to another embodiment of the present invention is prepared by pulverizing the aforementioned valuable metal reactant and provides a pulverized product having a high content of valuable metals.

A method for recovering valuable metals according to yet another embodiment of the present invention provides a method for recovering valuable metals with a high valuable metal content by producing the aforementioned valuable metal reactant and pulverized product.

### [TECHNICAL SOLUTION]

A valuable metal reactant according to an embodiment of the present invention is a valuable metal reactant comprising valuable metals recovered from a waste battery, and includes: a first valuable metal-containing material comprising an alloy or an oxide including at least one of iron (Fe) and phosphorus (P); a second valuable metal-containing material comprising a non-magnetic material; and a carbon compound comprising carbon. The first valuable metal-containing material comprises a third valuable metal-containing material comprising a magnetic material and a first lithium compound attached to a surface of the third valuable metal-containing material, and a lithium content of the first lithium compound may be 1.5 wt % or more of lithium (Li) based on the weight of the first valuable metal-containing material.

In one embodiment, based on 100 wt % of the first valuable metal-containing material, the content of the alloy or the oxide including at least one of iron (Fe) and phosphorus (P) may be 75.00 to 95.00 wt %. In one embodiment, the valuable metal reactant may be obtained from a lithium iron phosphate (LFP) battery.

In one embodiment, the valuable metal reactant may satisfy Equation 1 below regarding the content of the alloy or the oxide including at least one of iron (Fe) and phosphorus (P) and the content of lithium (Li) within the first valuable metal-containing material. $5.0 \leq \left[Fe-P\right] / \left[Li\right] \leq 60.0$ (In Equation 1, [Fe-P] and [Li] denote the content of the alloy or the oxide including at least one of iron (Fe) and phosphorus (P) and the content of lithium (Li), respectively, within the first valuable metal-containing material.)

In one embodiment, the first lithium compound may include a lithium compound comprising at least one of LiAlO₂, Li₅AlO₄, LiAl₅O₈, Li₂CO₃, LiF, Li₃PO₄, Li₄P₂O₇, LiPO₃, Li₂SiO₃, Li₄SiO₄, Li₂Si₂O₅, LiFeO₂, LiFe₅O₈, Li₃Fe₅O₈, and Li₅FeO₄. In one embodiment, the second valuable metal-containing material includes a second lithium compound, and a lithium content of the second lithium compound may be less than 20 wt % based on the weight of the second valuable metal-containing material.

In one embodiment, the second lithium compound may include at least one of LiAlO₂, Li₅AlO₄, LiAl₅O₈, Li₂CO₃, LiF, Li₃PO₄, Li₄P₂O₇, LiPO₃, Li₂SiO₃, Li₄SiO₄, Li₂Si₂O₅, LiFeO₂, LiFe₅O₈, Li₃Fe₅O₈, and Li₅FeO₄. In one embodiment, the third valuable metal-containing material may include at least one of iron (Fe) and phosphorus (P).

In one embodiment, the second valuable metal-containing material may include at least one of a second lithium compound, aluminum, aluminum oxide, aluminum phosphate oxide, copper, copper oxide, iron, iron oxide, phosphorus, phosphorus oxide, iron phosphate, and iron phosphate oxide.

A valuable metal pulverized product according to another embodiment of the present invention may be produced by pulverizing the aforementioned valuable metal reactant. In one embodiment, the valuable metal pulverized product may have an average particle diameter of 100 to 4000 µm.

A method for recovering valuable metals according to yet another embodiment of the present invention includes: a high-temperature reduction step of obtaining a valuable metal reactant by subjecting a battery pulverized material to a high-temperature reduction reaction; a magnetic separation step of separating the valuable metal reactant into a first valuable metal-containing material comprising an alloy or an oxide including at least one of iron (Fe) and phosphorus (P) and a second valuable metal-containing material comprising a non-magnetic material; and a first separation step of separating the second valuable metal-containing material into a carbon-containing material comprising carbon and a second lithium compound. The first valuable metal-containing material comprises a third valuable metal-containing material comprising a magnetic material and a first lithium compound attached to a surface of the third valuable metal-containing material, and a lithium content of the first lithium compound may be 1.5% or more of lithium based on the weight of the first valuable metal-containing material.

In one embodiment, a second separation step of separating the first valuable metal-containing material into the third valuable metal-containing material and the first lithium compound may be included after the first separation step. In one embodiment, the second separation step may include a step of detaching the first lithium compound attached to the surface of the third valuable metal-containing material.

In one embodiment, the second separation step may include a step of pulverizing the first valuable metal-containing material to an average particle diameter of 100 to 4000 µm. In one embodiment, the battery pulverized material may be pulverized from an iron phosphate battery.

In one embodiment, the high-temperature reduction step may be performed at a temperature of 700 to 1,350 °C. In one embodiment, the high-temperature reduction step may be performed under a condition of 5 vol % or less of oxygen.

In one embodiment, the first separation step may be performed through particle size separation. In one embodiment, a step of freezing a battery that serves as a base material for the battery pulverized material may be further included prior to the high-temperature reduction reaction step.

### [EFFECTS OF THE INVENTION]

A valuable metal reactant according to an embodiment of the present invention includes a first valuable metal-containing material comprising an alloy or an oxide including at least one of iron (Fe) and phosphorus (P). By including 1.5% or more of lithium (Li) within the first valuable metal-containing material, it provides a reactant having a high content of valuable metals, specifically lithium, thereby ensuring a high lithium recovery rate during recovery in subsequent processes.

A valuable metal pulverized product according to another embodiment of the present invention is prepared by pulverizing the aforementioned valuable metal reactant and provides a pulverized product with a high lithium recovery rate due to its high valuable metal content.

A method for recovering valuable metals according to yet another embodiment of the present invention provides a method with excellent valuable metal recovery rates by producing the aforementioned valuable metal reactant and pulverized product.

### [BRIEF DESCRIPTION OF THE DRAWINGS]

FIG. 1 is a graph of minimum cooling time according to an embodiment of the present invention.
FIG. 2 is a graph showing the relationship between battery weight, external cooling temperature, and cooling time according to an embodiment of the present invention.
FIGS. 3a and 3b are photographs of a comparative example where a fire occurred when pulverized after freezing for a period shorter than the minimum cooling time.
FIGS. 3c and 3d are photographs of an embodiment where no fire occurred when pulverized after freezing for a period longer than the minimum cooling time.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another. Accordingly, a first part, component, region, layer, or section described below may be referred to as a second part, component, region, layer, or section without departing from the scope of the present invention.

The terminology used herein is for the purpose of referring to specific embodiments only and is not intended to limit the present invention. As used herein, the singular forms include the plural forms as well unless the phrases clearly indicate otherwise. The meaning of "comprising" as used in the specification specifies specific characteristics, regions, integers, steps, operations, elements, and/or components, and does not exclude the presence or addition of other characteristics, regions, integers, steps, operations, elements, and/or components.

When a part is referred to as being "on" or "above" another part, it may be directly on or above the other part, or other parts may be involved therebetween. In contrast, when a part is referred to as being "directly on" another part, no other parts are interposed therebetween.

Unless otherwise defined, all terms including technical and scientific terms used herein have the same meaning as commonly understood by one of ordinary skill in the art to which this invention belongs. Terms defined in commonly used dictionaries are further interpreted as having meanings consistent with relevant technical literature and currently disclosed content and are not interpreted in an idealized or highly formal sense unless defined otherwise.

Hereinafter, embodiments of the present invention will be described in detail. However, these are presented as examples, and the present invention is not limited thereto; the present invention is only defined by the scope of the claims described later.

A valuable metal reactant according to an embodiment of the present invention is a valuable metal reactant comprising valuable metals recovered from a waste battery, and may include a first valuable metal-containing material comprising a magnetic material, a second valuable metal-containing material comprising a non-magnetic material, a carbon compound comprising carbon, and other residual impurities. In the method for recovering valuable metals described below, the valuable metal reactant refers to a reactant obtained after extracting the carbon compound (e.g., graphite) from the second valuable metal-containing material, following magnetic separation after the high-temperature reduction reaction of battery pulverized materials.

The waste battery may specifically be obtained from a lithium iron phosphate battery. Since lithium iron phosphate batteries are cheaper, safer, and have a longer lifespan than other lithium-ion batteries, they are highly utilized in electric vehicles and power grids. The valuable metal reactant is produced from the lithium iron phosphate battery, and being obtained by recycling lithium iron phosphate batteries which have recently shown high recovery rates, it may possess excellent economic efficiency and stability.

In one embodiment, the first valuable metal-containing material may include a third valuable metal-containing material and a first lithium compound attached to a surface of the third valuable metal-containing material. The valuable metal reactant is a reactant generated in a step prior to pulverizing the first valuable metal-containing material in the method for recovering valuable metals described below, and may include the third valuable metal-containing material alone or the third valuable metal-containing material in a state where the first lithium compound is attached to the surface.

In one embodiment, the third valuable metal-containing material may include, based on 100 wt % of the third valuable metal-containing material: Fe at 60 to 95 wt %; P at 5 to 30 wt %; Al at 3 wt % or less; Li at 5 wt % or less; Cu at 0.5 to 30 wt %; C at 7 wt % or less; and O as the balance. Specifically, the Fe content may be 65 to 90 wt %, more specifically 65 to 75 wt %, and even more specifically 68 to 73 wt %.

The P content may be 5 to 30 wt %, specifically 10 to 30 wt %, and more specifically 18 to 25 wt %. The Al content may be 3 wt % or less, specifically 2 wt % or less, and more specifically 1.5 wt % or less. The Li content may be 5 wt % or less, specifically 2 wt % or less, and more specifically 1.5 wt % or less.

In one embodiment, the third valuable metal-containing material within the first valuable metal-containing material may include at least one of iron and phosphorus. Specifically, the first valuable metal-containing material may include a magnetic material including at least one of iron and phosphorus. The first valuable metal-containing material may include, as a core portion, the third valuable metal-containing material comprising the magnetic material including at least one of iron and phosphorus.

In one embodiment, the first lithium compound may be disposed on the surface of the third valuable metal-containing material. Specifically, it may maintain a state of being bonded in a shell form due to a reaction between lithium in the first lithium compound and magnetic substances in the third valuable metal-containing material. The first lithium compound may be a composition including a lithium compound comprising at least one of LiAlO₂, Li₅AlO₄, LiAl₅O₈, Li₂CO₃, LiF, Li₃PO₄, Li₄P₂O₇, LiPO₃, Li₂SiO₃, Li₄SiO₄, Li₂Si₂O₅, LiFeO₂, LiFe₅O₈, Li₃Fe₅O₈, and Li₅FeO₄.

Based on 100 wt % of the first lithium compound, it may include: Fe at 1 to 35 wt %; P at 1 to 15 wt %; Al at 5 to 35 wt %; Li at 1 to 20 wt %; and O as the balance. Specifically, the Fe content may be 1 to 15 wt %, more specifically 5 to 15 wt %, and even more specifically 5 to 8.5 wt %.

The P content may be 1 to 15 wt %, specifically 1 to 4 wt %, and more specifically 1.5 to 3.0 wt %. The Al content may be 5 to 35 wt %, specifically 20 to 35 wt %, and more specifically 28 to 32 wt %. The Li content may be 1 to 20 wt %, specifically 8 to 15 wt %, and more specifically 11 to 14.5 wt %.

In one embodiment, the second valuable metal-containing material may include at least one of a second lithium compound, aluminum, aluminum oxide, aluminum phosphate oxide, copper, copper oxide, iron, iron oxide, phosphorus, phosphorus oxide, iron phosphate, and iron phosphate oxide.

The third valuable metal-containing material and the first lithium compound within the first valuable metal-containing material, as well as the second valuable metal-containing material, may include the aforementioned types of materials. These types of materials may be characteristic features appearing because they were obtained from a lithium iron phosphate battery.

In one embodiment, based on 100 wt % of the first valuable metal-containing material, the content of the alloy or the oxide including at least one of iron (Fe) and phosphorus (P) may be 75.00 to 95.00 wt %. Specifically, the content of the alloy or the oxide including at least one of iron (Fe) and phosphorus (P) may be 80 to 92.5 wt %, and more specifically 85 to 90 wt %.

If the content exceeds the upper limit of the aforementioned range, there is a problem in that carbon in the negative electrode material is oxidized, generating a large amount of carbon dioxide (CO₂) gas. If the content is below the lower limit of the range, the reduction reaction is inferior, leading to a decrease in the production of alloys containing Fe or P. This results in poor separation from lithium-containing compounds, leading to a decrease in the lithium recovery rate during the hydrometallurgical process.

In one embodiment, the lithium content of the first lithium compound may be 1.5 wt % or more of lithium based on the first valuable metal-containing material. Specifically, the lithium content of the first lithium compound may be 1.1 wt % to 9.5 wt %, and more specifically 6.36 to 8.42 wt % of lithium based on the first valuable metal-containing material.

When the lithium content of the first lithium compound is included in the first valuable metal-containing material within the aforementioned range, it is less affected by leaching caused by graphite in a subsequent process, thereby increasing the lithium recovery rate. If the lithium content is not within the range, it is heavily affected by leaching caused by graphite, resulting in a decreased lithium recovery rate.

In one embodiment, the content of the alloy or the oxide including at least one of iron (Fe) and phosphorus (P) and the content of lithium (Li) within the first valuable metal-containing material may satisfy Equation 1 below. $5.0 \leq \left[Fe-P\right] / \left[Li\right] \leq 60.0$

(In Equation 1, [Fe-P] and [Li] denote the content of the alloy or the oxide including at least one of iron (Fe) and phosphorus (P) and the content of lithium (Li), respectively, within the first valuable metal-containing material.)

Equation 1 represents the ratio of the content of the alloy or the oxide including either iron or phosphorus to the lithium content in the first valuable metal-containing material and can serve as an indicator of the lithium recovery rate. Equation 1 may satisfy 5.0 to 60.0, specifically 8.0 to 25.0, more specifically 8.0 to 20.0, even more specifically 9.0 to 15.0, and most specifically 10.0 to 14.0.

By satisfying the range of Equation 1, Fe-P alloys or oxides and lithium compounds are generated separately, providing the advantage of being able to separately recover lithium and the valuable metal Fe-P. If Equation 1 exceeds the upper limit, carbon oxidation issues arise. If it falls below the lower limit, inferior reduction leads to poor separation and decreased recovery rates in hydrometallurgy.

In one embodiment, the lithium content of the second lithium compound may be less than 20% of lithium based on the second valuable metal-containing material. Specifically, it may be 8.0% or less, 6.0% or less, and more specifically 1.15% or less of lithium. The lithium content of the second lithium compound may be greater than 0% because lithium is inevitably mixed in as the second valuable metal-containing material undergoes a classification process after magnetic separation.

By satisfying the range for the lithium content of the second lithium compound, there is an advantage in reducing the amount of lithium compounds lost together with graphite during classification. If it exceeds the range, the recovery rate decreases due to the impact of graphite-induced leaching.

A valuable metal pulverized product according to another embodiment of the present invention may be prepared by pulverizing the valuable metal reactant described above. Specifically, it may be prepared through a pulverization step performed to separate the third valuable metal-containing material from the first lithium compound disposed on its surface within the first valuable metal-containing material of the reactant.

More specifically, the valuable metal pulverized product may include pulverized third valuable metal-containing material and the first lithium compound. In one embodiment, it may have an average particle diameter of 100 to 4000 µm. By having an average particle diameter in this range, the first lithium compound can be easily obtained, increasing the lithium recovery rate. Detailed descriptions and contents regarding the third valuable metal-containing material and the first lithium compound can refer to the sections on the valuable metal reactant.

A method for recovering valuable metals according to another embodiment of the present invention includes: subjecting battery pulverized materials to a high-temperature reduction reaction; a magnetic separation step of separating the resulting reactants into a first valuable metal-containing material comprising magnetic material and a second valuable metal-containing material comprising non-magnetic material; and a first separation step of separating carbon-containing materials from the valuable metal-containing materials from the product obtained after the magnetic separation.

The battery pulverized material refers to the base material for the battery pulverized material or the pulverized material itself. The base material may include end-of-life batteries, waste batteries, and waste materials generated during the manufacturing process of lithium-ion batteries. Specifically, waste batteries may include scrap, jelly rolls, and positive electrode materials such as slurry that constitute waste batteries, defective products from the manufacturing process, residuals within the process, and generated debris. The base material can subsequently be produced into battery pulverized material through a crushing process. As mentioned, the waste battery may be a lithium iron phosphate battery.

The pulverized material itself may be a product that has completed crushing, such as black powder. Recycling waste batteries in this manner to produce battery pulverized material offers environmental and economic benefits.

The step of subjecting battery pulverized materials to a high-temperature reduction reaction involves introducing them into a furnace that can raise them to high temperatures, thereby increasing the temperature above the melting point. This step may involve heat treatment conditions for the high-temperature reduction reaction without going through a melting stage.

In one embodiment, the high-temperature reduction reaction may be performed in a temperature range of 700 to 1,350 °C. In one embodiment, it may be performed under a condition of 5 vol % or less of oxygen. By performing the reaction under these conditions, there are advantages in improving lithium recovery and reducing CO₂ emissions.

The magnetic separation step separates the generated reactant into a first valuable metal-containing material comprising magnetic material and a second valuable metal-containing material comprising non-magnetic material (specifically, non-magnetic substances). Magnetic separation can separate particles through contact with a magnetic body, for example, and various types of magnetic separation methods can be applied.

When performing magnetic separation, the first valuable metal-containing material containing magnetic substances such as iron can be sorted and separated, while materials not containing magnetic substances can be separated into the second valuable metal-containing material.

The first valuable metal-containing material may include a third valuable metal-containing material and a first lithium compound attached to its surface. Specifically, the first valuable metal-containing material may be included as the containing material itself, comprising an alloy or an oxide including at least one of iron (Fe) and phosphorus (P).

In one embodiment, at least a portion of the first valuable metal-containing material may be included as an inclusion in a state where the first lithium compound is disposed on the third valuable metal-containing material. Specifically, it can consist of the third valuable metal-containing material alone or in combination with the first lithium compound on its surface. Prioritizing the sorting of the third valuable metal-containing material with the first lithium compound on its surface through magnetic separation prevents the lithium compound from detaching during subsequent particle size separation, thereby increasing the lithium recovery rate.

The second valuable metal-containing material may include at least one of aluminum, aluminum oxide, aluminum phosphate oxide, copper, copper oxide, iron, iron oxide, phosphorus, phosphorus oxide, iron phosphate, and iron phosphate oxide. It is a valuable metal-containing material comprising non-magnetic substances and may include materials such as LiAlO₂, Cu, CuO, Cu₂O, FeO, Fe₂O₃, Fe₃O₄, P₂O₅, and FePO₄.

In one embodiment, the third valuable metal-containing material may include an alloy or an oxide including at least one of iron (Fe) and phosphorus (P). In one embodiment, the first lithium compound may be, for example, LiAlO₂, a lithium aluminum oxide. Specific contents can refer to the previously described sections.

The first separation step of separating carbon-containing materials and the second lithium compound from the second valuable metal-containing material involves separating carbon materials, specifically graphite, from the non-magnetic second valuable metal-containing material obtained after magnetic separation. In one embodiment, the graphite separation may be performed through either particle size separation or gravity separation.

In one embodiment, particle size or gravity separation can be performed using means such as a cyclone or a flotation machine. Specifically, it can be performed based on approximately 100 µm to separate graphite. Graphite can be separated through particle size separation in a region of 100 µm or less.

Separately separating graphite through classification after magnetic separation resolves the problem of lithium loss due to fine lithium compounds being removed during graphite removal-a common issue when graphite separation is performed first. This advantageously increases the amount of lithium introduced into subsequent processes.

As mentioned, in the reactant obtained after preferential magnetic separation followed by classification of graphite, the lithium content of the first lithium compound may be 1.5 wt % or more based on the first valuable metal-containing material. Specifically, it may be 6 wt % or more.

By performing magnetic sorting before classification, the third valuable metal-containing material with the first lithium compound on its surface is recovered simultaneously. This reduces the impact of graphite-induced leaching in subsequent processes, increasing the lithium recovery rate.

In one embodiment, the lithium content of the second lithium compound may be less than 20% based on the second valuable metal-containing material. Specifically, it may be 17 wt % or less, more specifically 9% or less, 6.0 wt % or less, 5.0 wt % or less, and most specifically 1.15 wt % or less.

By separating graphite through classification after magnetic separation, lithium loss caused by the removal of fine lithium compounds during sorting is prevented. This increases the lithium content transferred to post-processing. The second lithium compound prevents the issue of decreased lithium recovery rates in subsequent stages that occurs when large amounts of lithium compounds are included during additional graphite sorting.

In one embodiment, after separating carbon-containing materials and the second lithium compound from the product obtained after magnetic separation, a second separation step of separating the first valuable metal-containing material into the third valuable metal-containing material and the first lithium compound may be included.

The second separation step separates the third valuable metal-containing material and the first lithium compound from the first valuable metal-containing material through mechanical or physical external force. For example, alloys or oxides containing at least one of iron and phosphorus can be separated from lithium compounds such as LiAlO₂ disposed on the surface. Pulverization is one such method of applying external force. This physical separation increases the recovery rate of lithium as well as valuable metals like iron and phosphorus.

In one embodiment, the second separation step of pulverizing to separate the materials may include pulverizing the first valuable metal-containing material to an average particle diameter range of 100 to 4000 µm. Specifically, it may include pulverizing to a range of 100 to 1000 µm. This range ensures high lithium content in the first lithium compound attached to the Fe-P-containing third valuable metal-containing material.

If pulverization exceeds the upper limit of the range, the size of Fe-P-containing alloys generated during high-temperature heat treatment increases, which prolongs leaching time in subsequent hydrometallurgical processes. If it falls below the lower limit, the size of alloys generated from pulverized materials of 100 µm or less becomes too small, causing graphite to be separated together during magnetic sorting. This leads to process delays in the leaching stage due to interference from graphite, which does not dissolve in acid.

In one embodiment, the second separation step of pulverizing may be performed after the magnetic separation step. It can be performed, for example, between magnetic separation and graphite separation, or after both. Performing it after magnetic separation offers the benefit of preventing the agglomeration of masses such as flakes.

In one embodiment, a step of removing impurities may be further included before the magnetic separation step. Impurities may include flakes, specifically materials generated from aluminum or copper.

Removing impurities can be done through magnetic sorting, particle size separation, or gravity separation. For magnetic sorting, a magnetic body with a magnetic field strength that can separate flakes from the Fe-P-containing valuable metal-containing material is used. Particle size separation can isolate iron pieces through size control, specifically based on an average particle diameter range of 5 to 10 mm or more. Prioritizing impurity removal before magnetic separation increases the recovery rate of valuable metals by eliminating substances that could interfere with the sorting.

In one embodiment, before the high-temperature reduction reaction of battery pulverized materials, steps of freezing the battery and pulverizing the frozen battery may be performed. Freezing the battery before pulverization prevents battery ignition during the crushing process.

Freezing is conducted at a temperature sufficient to freeze the electrolyte inside the battery. Specifically, it can be performed in a temperature range of -150 to -20 °C, more specifically -150 to -50 °C, and most specifically -80 to -60 °C.

Freezing within these ranges reduces residual voltage (e.g., 2 V to 3 V) to near 0 V. Even if a short circuit occurs due to direct contact between the positive electrode and negative electrode, no battery reaction occurs, the temperature does not rise, and electrolyte gas generation and combustion are prevented. Additionally, since the electrolyte is frozen or vaporization is suppressed, lithium-ion mobility is extremely low, significantly reducing conductivity. Vaporization suppression also prevents the generation of flammable gases like ethylene, propylene, and hydrogen.

If the freezing process occurs outside these ranges, such as above -60 °C, the voltage may not drop to 0 V, potentially allowing short-circuit reactions, and the electrolyte may not freeze completely. Cooling to -150 °C ensures sufficient freezing and voltage reduction; temperatures lower than this are unnecessary. Freezing before pulverization thus prevents the risk of fire during the process.

Pulverizing the frozen battery involves applying impact or pressure so that portions of the battery break off. This includes crushing, cutting, compressing, or combinations thereof. It can be performed using a pulverizer and may be conducted at least once, either continuously or discontinuously.

Pulverization can be carried out while supplying inert gases (CO₂, Nitrogen, Water, or combinations) or under a vacuum of 100 torr or less. When freezing is done at -60 to -20 °C, these conditions suppress oxygen supply and electrolyte reactions, preventing explosions and flammable gas generation.

In one embodiment, pulverization is performed such that the maximum size of the battery pulverized material is 100 mm or less, specifically 50 mm or less. If the size exceeds 100 mm, heat generated due to instability during crushing can rise to 120 °C-the average vaporization temperature of electrolytes-leading to safety issues like fire.

In one embodiment, the freezing step may satisfy Equation 2 below. $Minimum Cooling Time \left(Hr\right) = A \times \left({W}^{0.33}\right)$

(A = 4 × e^{(-0.02×dT)}, W = Battery weight (Kg), dT= |External Cooling Temperature - Target Temperature|and | | denotes an absolute value.)

The minimum cooling time in Equation 2 refers to the weight of the battery, for example, a weight for a battery pack, a single battery, or a combination thereof. The minimum cooling time refers to the external cooling temperature, which is a cooling temperature applied to the battery, for example, a target temperature for cooling an electrolyte within the battery.

The step of freezing the battery has an advantage in that the electrolyte inside the battery is cooled by performing the freezing for the minimum cooling time or longer, allowing subsequent processes to be performed stably. In the step of freezing the battery, if the battery is frozen for a time shorter than the minimum cooling time, there is a problem that a risk of fire may occur during crushing because the electrolyte is not sufficiently cooled.

Hereinafter, preferred embodiments and comparative examples of the present invention will be described. However, the following examples are merely preferred embodiments of the present invention, and the present invention is not limited to the following examples.

### <Experimental Example>

### <Battery internal temperature based on minimum freezing time>

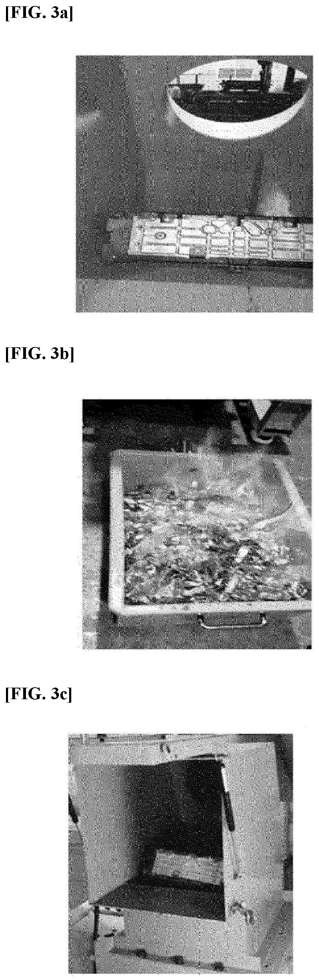

The battery pack used in the Example was pulverized without freezing, using the same pulverizer as in the Example. During the pulverization process, as shown in FIGS. 3A and 3B, a flame occurred due to a short circuit. At this time, the battery used was a lithium iron phosphate (LFP) battery.

As such, through the Examples and Comparative Examples, it can be confirmed that stability is excellent as short circuits and flames do not occur in the battery pulverization step by including the step of freezing the battery pack containing the battery before pulverizing the battery.

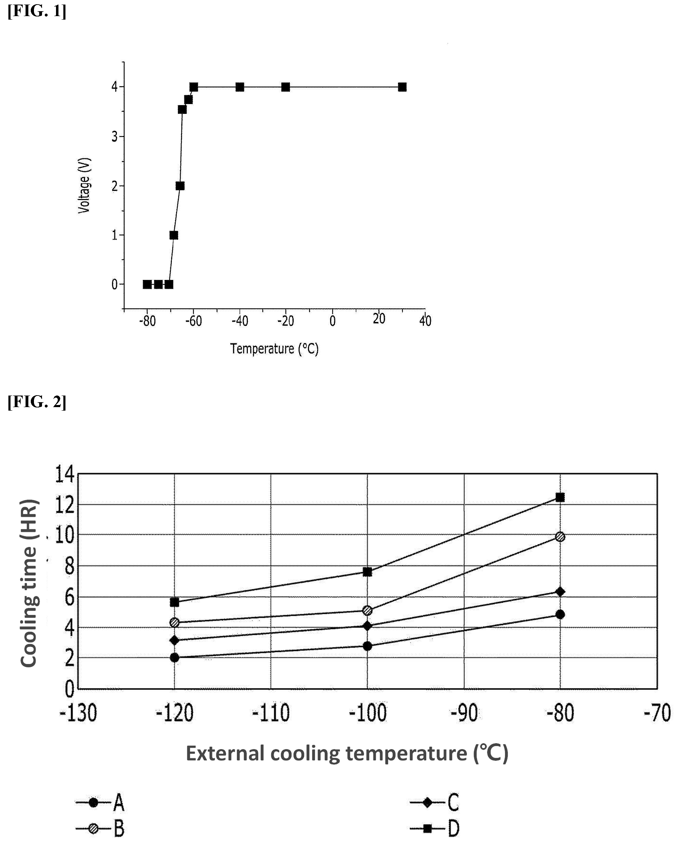

FIG. 1 shows the change in voltage of a battery according to a cooling temperature, according to an embodiment of the present invention.

Referring to FIG. 1, when measuring the battery voltage while freezing the battery to -80 °C, it can be confirmed that the battery pack does not lose battery characteristics because it shows almost the same voltage from a high temperature of about 40 °C to room temperature and down to -60 °C. Subsequently, when the temperature was lowered from -60 °C to -70 °C, the voltage dropped sharply, and it was confirmed that the voltage became 0 below -70 °C. Thus, it was confirmed that short circuits do not occur when the battery is frozen at -60 to -150 °C.

FIG. 2 is a graph showing the relationship among battery weight, external cooling temperature, and cooling time, according to an embodiment of the present invention.

Referring to FIG. 2, in the battery processing method according to an embodiment of the present invention, it can be confirmed that a minimum cooling time for cooling the battery can be derived in the step of freezing the battery. Specifically, it can be confirmed that the minimum cooling time is related to the battery weight, the external cooling temperature, and the target temperature.

More specifically, the external cooling temperature and the minimum cooling time are plotted when the target temperature was set to -70 °C and the battery weights were set to 2.5 kg (A), 10 kg (B), 20 kg (C), and 50 kg (D), respectively. During cooling of the battery, it can be confirmed that after a predetermined time, cooling of the electrolyte of the battery begins and the voltage reaches a state of 0. Through this, it can be confirmed that a minimum maintenance time for sufficiently cooling the interior, specifically the electrolyte, is required in cooling the battery.

Specifically, in a heat transfer situation for cooling where heat is removed to the outside, it can be confirmed that the battery weight and time for cooling are required when the specific heat of the battery itself is considered.

As such, in the present invention, the minimum time required for cooling can be identified using the external cooling temperature for freezing, the target temperature, and the battery weight to cool the battery.

Table 1 below describes the minimum cooling time according to the battery weight and the external cooling temperature.

**[Table 1]**

| | Battery Weight [Kg] | External Cooling Temperature [°C] | Target Temperature [°C] | Equation 2 | Minimum Cooling Time [h] |
|---|---|---|---|---|---|
| A_1 | 2.5 | -120 | -70 | 1.9 | 1.9 |
| A_2 | 2.5 | -100 | -70 | 2.9 | 2.9 |
| A_3 | 2.5 | -80 | -70 | 4.4 | 4.4 |
| B_1 | 10 | -120 | -70 | 3.1 | 3.1 |
| B_2 | 10 | -100 | -70 | 4.6 | 4.6 |
| B_3 | 10 | -80 | -70 | 7.0 | 7.0 |
| C_1 | 20 | -120 | -70 | 3.9 | 3.9 |
| C_2 | 20 | -100 | -70 | 5.8 | 5.8 |
| C_3 | 20 | -80 | -70 | 8.8 | 8.8 |
| D_1 | 50 | -120 | -70 | 5.3 | 5.3 |
| D_2 | 50 | -100 | -70 | 7.9 | 7.9 |
| D_3 | 50 | -80 | -70 | 11.9 | 11.9 |

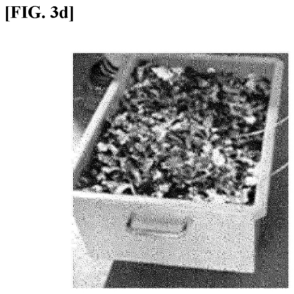

Referring to Table 1, it can be confirmed that as the battery weight is smaller, the minimum cooling time required for the battery to be cooled is further reduced. Also, it can be confirmed that the battery, specifically, the electrolyte of the battery, is cooled when cooling is performed for the minimum cooling time derived from Equation 2 based on the battery weight, the external cooling temperature, and the target temperature. Furthermore, when the battery is cooled for a time equal to or longer than the value of Equation 2, a fire does not occur during the subsequent process of pulverizing the battery. FIGS. 3A and 3B are photographs showing that a fire occurred when pulverized after freezing for a time shorter than the minimum cooling time according to a Comparative Example of the present invention, and FIGS. 3C and 3D are photographs of an Example in which no fire occurred when pulverized after freezing for a time longer than the minimum cooling time according to an embodiment of the present invention.

Referring to FIGS. 3A and 3B, the fire occurrence state of the pulverized material was tested when the battery was frozen for a time shorter than the required minimum cooling time for cooling the battery. In this experiment, when the battery weight was 25 kg, the external cooling temperature was -95 °C, and the target freezing temperature was -70 °C, the experiment was conducted for 5 hours, which is shorter than the value of 7 hours calculated by Equation 2 below. $Minimum Cooling Time = A \times \left({W}^{0.33}\right)$

(In Equation 2, A = 4 × e^{(-0.02×dT)}, W = battery weight (Kg), dT = |External cooling temperature - Target temperature|, and | | denotes an absolute value.)

Referring to FIGS. 3C and 3D, the fire occurrence state of the pulverized material was tested when the battery was frozen for a time equal to or longer than the minimum freezing time required for cooling. In this experiment, the battery weight and the external cooling temperature were the same as those in FIGS. 3A and 3B, and the minimum freezing time was set to 7 hours or longer.

Table 2 below compares the fire occurrence states of the Example and the Comparative Example according to the same battery weight, the external cooling temperature, and the minimum freezing time based on FIGS. 3A to 3D. Regarding the determination of the fire occurrence state, "O" was assigned when fire was observed after pulverizing the battery, and "X" was assigned otherwise.

**[Table 2]**

| | Battery Weight [Kg] | External Cooling Temperature [°C] | Target Temperature [°C] | Equation 2 | Actual cooling time [h] | Fire occurrence |
|---|---|---|---|---|---|---|
| Comparative Example | 25 | - 95 | - 70 | 7.0 | 5 | O |
| Example | 25 | - 95 | - 70 | 7.0 | 7 | X |

Referring to Table 2, it can be confirmed that if the battery is cooled for a time shorter than the value of Equation 2, which corresponds to the minimum cooling time, the electrolyte is not cooled, resulting in a fire after the battery is pulverized. As such, it can be confirmed that when the battery is cooled using the value of Equation 2 as the minimum cooling time, the pulverized material can be stably utilized without fire occurrence after the battery is pulverized.

### <Crushed Battery Heat Treatment>

In the step of performing Calcination heat treatment on the battery pulverized material, a dry heat treatment was performed in a temperature range of 700 to 1,350 °C under a condition of 5 vol % or less of oxygen. Specifically, the Calcination heat treatment in the present experiment was performed in a dry manner in a temperature range of 900 to 1,200 °C, and specifically about 1,100 °C, and under a condition of about 3 vol % or less of oxygen.

After the dry heat treatment, the size of the produced battery pulverized material was 10 to 20 mm based on the long axis among width, length, and height, the graphite content was 5 % or more, and the impurity content of plastics or iron pieces such as an Al cover and a PCB substrate in the pulverized material was less than 5 %.

### <Control of Method for Recovering Valuable Metal Reactants>

After the high-temperature reduction reaction, components included in the produced product include an Fe-P alloy, a lithium compound, graphite, and other residual impurities such as copper and aluminum.

### Comparative Examples 1 and 2

After the high-temperature reduction reaction, the produced product was classified to extract graphite, and thereafter, magnetic sorting was performed. For each of Comparative Examples 1 and 2, values measured twice were described.

### Examples 1 and 2

After the high-temperature reduction reaction, the produced product was subjected to magnetic sorting to separate a valuable metal-containing material including a magnetic material and a valuable metal-containing material including a non-magnetic material, and additional pulverizing and sorting treatment were performed in consideration of components for each of the magnetic and non-magnetic materials. Thereafter, graphite was extracted through classification. For each of Examples 1 and 2, values measured twice were described.

Table 3 below shows the lithium content in graphite according to the sequence of graphite classification and magnetic separation.

**[Table 3]**

| Classification | Procedure | Lithium Content in Graphite [%] | Lithium Recovery Rate upon Leaching [%] |
|---|---|---|---|
| Comparative Example | Magnetic Separation After Classification | 6.18 | 31 |
| Example | Classification After Magnetic Separation | 0.47 | 82 |

Referring to Table 3, it was confirmed that when the magnetic separation step is performed before the classification step as in the Example, it is advantageous for lithium recovery because the third valuable metal-containing material, having the first lithium compound in the first valuable metal-containing material disposed on a surface thereof, is simultaneously recovered.

It was confirmed that when the classification step is performed before the magnetic separation step as in the Comparative Example, the first lithium compound included in the first valuable metal-containing material is separated together with graphite, making it difficult to recover lithium.

Since graphite does not dissolve during acid leaching, a separate separation process is performed. In this case, there is a problem in that the lithium recovery rate is reduced in the leaching process because lithium is also separated together with the graphite.

Table 4 below shows the contents of reactants recovered according to the order of graphite classification and magnetic separation, categorized by magnetic properties.

**[Table 4]**

| Experimental Example | Magnetic Classification | Classification | Fe-P [wt%] | Li [wt%] | C [wt%] | After Leaching Lithium Recovery Rate (%) | Equation 1 ([Fe-P]/ [Li]) |
|---|---|---|---|---|---|---|---|
| Comparative Example 1 | First Valuable Metal Content | Magnetic separation after classification | 97.69 | 0.71 | 1.6 | 75 | 137.59 |
| Comparative Example 2 | First Valuable Metal Content | | 96.52 | 1.38 | 2.1 | 63 | 69.94 |
| Comparative Example 1 | Second Valuable Metal Content | | 2.07 | 8.63 | 89.3 | 17 | 0.24 |
| Comparative Example 2 | Second Valuable Metal Content | | 1.32 | 11.08 | 87.6 | 12 | 0.12 |
| Example 1 | First Valuable Metal Content | Classification after magnetic separation | 87.28 | 8.42 | 4.3 | 88 | 10.37 |
| Example 2 | First Valuable Metal Content | | 88.14 | 6.36 | 5.5 | 84 | 13.86 |
| Example 1 | Second Valuable Metal Content | | 2.37 | 1.23 | 96.4 | 13 | 1.93 |
| Example 2 | Second Valuable Metal Content | | 1.75 | 1.15 | 97.1 | 9 | 1.52 |

Referring to Table 4, it was confirmed that there were differences in the composition ratios of Fe-P, Li, and C, which are components of the input pulverized material, after high-temperature reaction depending on whether classification followed by magnetic separation was performed as in Comparative Examples 1 and 2, or magnetic separation followed by classification was performed as in Examples 1 and 2, as shown in Table 4.

As in the Comparative Examples, when classification was performed preferentially, it was confirmed that the lithium content in the first valuable metal-containing materials of Comparative Examples 1 and 2 was included in an amount of about 0.7 to 1.4 wt %, specifically 0.71 wt % and 1.38 wt %.

In contrast, as in the Examples, when magnetic separation was performed preferentially, the lithium content in the first valuable metal-containing materials of Examples 1 and 2 was included in an amount of about 6 to 9 wt %, specifically 6.36 wt % and 8.42 wt %, confirming that when classification is performed after magnetic separation, the loss of the lithium compound is low and the lithium content in the first valuable metal-containing material is high at 1.5 wt % or more.

Specifically, it was confirmed that the lithium content in the second valuable metal-containing material of Example 1 or 2 was included in an amount of about 8 to 11 wt %, and the lithium content in the second valuable metal-containing material of Comparative Example 1 or 2 was about 0.7 to 1.4 wt %, which is about 6 to 16 times lower.

It was confirmed that the contents of Fe-P in the second valuable metal-containing materials of the Comparative Examples and the Examples were at similar levels of 0.5 to 3 wt %.

In contrast, the content of graphite in the second valuable metal-containing material of the Comparative Example was shown to be lower by about 10 % compared to the Example. This is considered to be because a portion of the Li compound, which had been attached to the magnetic substance, is detached and dispersed during classification. As can be seen from Table 4, in the case of a lithium compound mixed with graphite, the lithium recovery rate may be lowered due to a decrease in leaching efficiency caused by the high graphite content during the acid leaching process.

### <Crushing of Valuable Metal Contents>

The first valuable metal-containing material of Example 1, which was magnetically separated, was pulverized in a particle size range of 500 to 1000 µm through an Attrition Mill, thereby separating an Fe-P alloy and LiAlO₂, which is a lithium compound attached to a surface of the Fe-P alloy. Subsequently, the composition ratios for the Fe-P alloy and the lithium compound are shown in Table 5 below.

**[Table 5]**

| First valuable metal content | after crushing and separation | Li | Fe | P | Al | O | Sum |
|---|---|---|---|---|---|---|---|
| | | [wt%] | [wt%] | [wt%] | [wt%] | [wt%] | [wt%] |
| Particle size 500~1000 µm | First lithium compound | 13.44 | 7.61 | 2.15 | 31.68 | 45.12 | 100 |
| | Third valuable metal content | 1.24 | 71.0 | 23.7 | 1.4 | 2.65 | 100 |

Referring to Table 5 above, the weight percentages (wt %) of the major components are shown when the first valuable metal-containing material was pulverized based on a particle size of 500 to 1000 µm. In the pulverizing step, it was confirmed that upon pulverizing based on a particle size of 500 to 1000 µm, the Li content of the first lithium compound attached to the surface of the third valuable metal-containing material comprising Fe-P was high. Through this, it can be confirmed that upon separating the first lithium compound after pulverizing the first valuable metal-containing material, the Li content of the reactant included in a subsequent process is increased. Furthermore, when applied to a subsequent process, since the first lithium compound is mixed with only a trace amount of graphite and thus does not undergo a separate graphite sorting step, it was determined that the treatment process is shortened, which would be economical.

Although the preferred embodiments of the present invention have been described in detail above, the scope of the present invention is not limited thereto, and various modifications and improvements by those skilled in the art using the basic concepts defined in the following claims also fall within the scope of the present invention.

## Claims

1. A valuable metal reactant comprising valuable metals recovered from a waste battery, the valuable metal reactant comprising: a first valuable metal-containing material comprising an alloy or an oxide including at least one of iron (Fe) and phosphorus (P); a second valuable metal-containing material comprising a non-magnetic material; and a carbon compound comprising carbon, wherein the first valuable metal-containing material comprises a third valuable metal-containing material comprising a magnetic material and a first lithium compound attached to a surface of the third valuable metal-containing material, and wherein a lithium content of the first lithium compound is 1.5 wt % or more based on a total weight of the first valuable metal-containing material.

2. The valuable metal reactant of claim 1, wherein a content of the alloy or the oxide including at least one of iron (Fe) and phosphorus (P) is 75.00 to 95.00 wt % based on 100 wt % of the first valuable metal-containing material.

3. The valuable metal reactant of claim 1, wherein the valuable metal reactant is obtained from a lithium iron phosphate battery.

4. The valuable metal reactant of claim 1, wherein a content of the alloy or the oxide including at least one of iron (Fe) and phosphorus (P) and a content of lithium (Li) in the first valuable metal-containing material satisfy Equation 1 below: <Equation 1> 5.0 ≤ [Fe-P]/[Li] ≤ 60.0 (In Equation 1, [Fe-P] and [Li] denote the content of the alloy or the oxide including at least one of iron (Fe) and phosphorus (P) and the content of lithium (Li), respectively, in the first valuable metal-containing material.)

5. The valuable metal reactant of claim 1, wherein the first lithium compound comprises at least one lithium compound selected from the group consisting of LiAlO₂, Li₅AlO₄, LiAl₅O₈, Li₂CO₃, LiF, Li₃PO₄, Li₄P₂O₇, LiPO₃, Li₂SiO₃, Li₄SiO₄, Li₂Si₂O₅, LiFeO₂, LiFe₅O₈, Li₃Fe₅O₈, and Li₅FeO₄.

6. The valuable metal reactant of claim 1, wherein the second valuable metal-containing material comprises a second lithium compound, and wherein a lithium content of the second lithium compound is less than 20 wt % based on a total weight of the second valuable metal-containing material.

7. The valuable metal reactant of claim 6, wherein the second lithium compound comprises at least one lithium compound selected from the group consisting of LiAlO₂, Li₅AlO₄, LiAl₅O₈, Li₂CO₃, LiF, Li₃PO₄, Li₄P₂O₇, LiPO₃, Li₂SiO₃, Li₄SiO₄, Li₂Si₂O₅, LiFeO₂, LiFe₅O₈, Li₃Fe₅O₈, and Li₅FeO₄.

8. The valuable metal reactant of claim 1, wherein the third valuable metal-containing material comprises at least one of iron (Fe) and phosphorus (P).

9. The valuable metal reactant of claim 1, wherein the second valuable metal-containing material comprises at least one selected from the group consisting of a second lithium compound, aluminum, aluminum oxide, aluminum phosphate oxide, copper, copper oxide, iron, iron oxide, phosphorus, phosphorus oxide, iron phosphate, and iron phosphate oxide.

10. A valuable metal pulverized product produced by pulverizing the valuable metal reactant of any one of claims 1 to 9.

11. The valuable metal pulverized product of claim 10, having an average particle diameter of 100 to 4000 µm.

12. A method for recovering valuable metals, the method comprising:
a high-temperature reduction step of obtaining a valuable metal reactant by subjecting a battery pulverized material to a high-temperature reduction reaction;
a magnetic separation step of separating the valuable metal reactant into a first valuable metal-containing material comprising an alloy or an oxide including at least one of iron (Fe) and phosphorus (P) and a second valuable metal-containing material comprising a non-magnetic material; and a first separation step of separating the second valuable metal-containing material into a carbon-containing material comprising carbon and a second lithium compound,
wherein the first valuable metal-containing material comprises a third valuable metal-containing material comprising a magnetic material and a first lithium compound attached to a surface of the third valuable metal-containing material, and wherein a lithium content of the first lithium compound is 1.5 wt % or more based on a total weight of the first valuable metal-containing material.

13. The method of claim 12, further comprising, after the first separation step, a second separation step of separating the first valuable metal-containing material into the third valuable metal-containing material and the first lithium compound.

14. The method of claim 13, wherein the second separation step comprises detaching the first lithium compound attached to the surface of the third valuable metal-containing material.

15. The method of claim 14, wherein the second separation step comprises pulverizing the first valuable metal-containing material to an average particle diameter of 100 to 4000 µm.

16. The method of claim 12, wherein the battery pulverized material is pulverized from an iron phosphate battery.

17. The method of claim 12, wherein the high-temperature reduction step is performed at a temperature of 700 to 1,350 °C.

18. The method of claim 12, wherein the high-temperature reduction step is performed under a condition of 5 vol % or less of oxygen.

19. The method of claim 12, wherein the first separation step is performed through particle size separation.

20. The method of claim 12, further comprising, prior to the high-temperature reduction reaction step, freezing a battery that is a base material of the battery pulverized material.
